# EUROPEAN PATENT APPLICATION

(11) **EP 3 979 370 A1**
(43) Date of publication of application: **06.04.2022**
(21) Application number: 20814262.0
(22) Date of filing: 12.05.2020
(51) Int. Cl.: H01M 4/587, H01G 11/06, H01G 11/24, H01G 11/32, H01G 11/36, H01G 11/44, H01G 11/62, H01M 10/0566, H01M 10/0568

(54) **POWER STORAGE DEVICE**

(30) Priority: 30.05.2019 JP 2019101411
(71) Applicant: SEKISUI CHEMICAL CO., LTD., Osaka-shi Osaka 530-8565 (JP)
(72) Inventor: WADA, Takuya, Mishima-gun, Osaka 618-0021 (JP); SASAGAWA, Naoki, Mishima-gun, Osaka 618-0021 (JP)
(74) Representative: Ter Meer Steinmeister & Partner
(86) International application number: PCT/JP2020/018961
(87) International publication number: WO 2020/241242

(57) **Abstract**

Provided is a power storage device having excellent withstand voltage performance and enabling high-voltage driving. This power storage device includes: an electrode formed of an electrode material containing a carbon material and essentially free of a binder; and an electrolytic solution including an ionic liquid including, as components, a cation and an anion.

## Description

### TECHNICAL FIELD

The present invention relates to a power storage device using an electrode formed of an electrode material containing a carbon material.

### BACKGROUND ART

In recent years, R&D of power storage devices such as capacitors or lithium ion secondary batteries have been actively conducted for mobile devices, hybrid vehicles, electric vehicles, household power storage applications, and others. As an electrode material for power storage devices, a carbon material such as graphite, activated carbon, carbon nanofiber, or carbon nanotube is widely used in view of an environmental aspect.

Patent Document 1 below discloses an electric double layer capacitor having a polarizable electrode layer containing an activated carbon, a conductive agent, and a binder. As the conductive agent, carbon black is described. The binder plays a role of bonding a current collector and an active material in the electrode. Patent Document 1 discloses the electric double layer capacitor further optionally including an electrolytic solution containing, for example, propylene carbonate.

### Related Art Document

### Patent Document

Patent Document 1: WO 2008/029865 A

### SUMMARY OF THE INVENTION

### PROBLEMS TO BE SOLVED BY THE INVENTION

Meanwhile, in the field of power storage devices such as capacitors or lithium ion secondary batteries, further improvement in performance such as high-voltage driving has recently been sought. In particular, since the energy density E in the capacitor is expressed as E = 1/2 CV² (C: Capacitance, V: Voltage), it is known that the energy density is dramatically increased by increasing the driving voltage.

However, the electric double layer capacitor as in Patent Document 1 has a problem of difficulty in high-voltage driving.

The present inventors have conducted intensive research on this cause and, as a result, have found that when the electric double layer capacitor as in Patent Document 1 is subjected to high-voltage driving, the binder and the electrolytic solution are decomposed, thereby deteriorating capacitor performance and causing a problem in safety.

The purpose of the present invention is to provide a power storage device having excellent withstand voltage performance and enabling high-voltage driving.

### MEANS FOR SOLVING THE PROBLEM

A power storage device according to the invention includes: an electrode formed of an electrode material containing a carbon material and essentially free of a binder; and an electrolytic solution including an ionic liquid including, as components, a cation and an anion.

In a specific item of the power storage device according to the invention, the cation in the ionic liquid is at least one compound selected from the group consisting of 1-butyl-1-methylpyrrolidinium, n,n-diethyl-n-methyl-n-(2-methoxyethyl)ammonium, 1-methyl-1-propylpiperidinium, 1-methyl-1-propyl-pyrrolidinium, N-(2-methoxyethyl)-N-methylpyrrolidinium, N,N,N-trimethyl-N-propylammonium, and 1-ethyl-3-methylimidazolium.

In another specific item of the power storage device according to the invention, the cation in the ionic liquid is 1-butyl-1-methylpyrrolidinium.

In still another specific item of the power storage device according to the invention, the anion in the ionic liquid is at least one compound selected from the group consisting of bis(fluorosulfonyl)imide, bis(trifluoromethanesulfonyl)imide, tetrafluoroborate, and methyl phosphonate.

In still another specific item of the power storage device according to the invention, while 0.2 g of the carbon material is charged in a cylindrical syringe having a diameter of 2 cm and is compressed at a pressure of 16 kN and when a whole amount of the compressed carbon material is taken out from the syringe and injected onto a sieve having a mesh size of 4.75 mm and the sieve is shaken for 1 min, the carbon material remaining on the sieve after the shaking has an weight of 90 wt% or more based on 100 wt% of the carbon material injected onto the sieve.

In still another specific item of the power storage device according to the invention, the carbon material includes a carbon material having a graphene layered structure. Preferably, the carbon material having a graphene layered structure is graphite or exfoliated graphite. Preferably, the carbon material having a graphene layered structure is partially exfoliated graphite having a graphite structure and partially exfoliated graphite.

In still another specific item of the power storage device according to the invention, the carbon material includes a resin carbide.

Still another specific item of the power storage device according to the invention provides an electric double layer capacitor or a lithium ion capacitor.

### EFFECT OF THE INVENTION

The invention makes it possible to provide a power storage device having excellent withstand voltage performance and enabling high-voltage driving.

### BRIEF DESCRIPTION OF DRAWINGS

[Fig. 1] Fig. 1 is a schematic view of a three-electrode cell produced in Examples.
[Fig. 2] Fig. 2 is a chart showing charging and discharging outputs of a three-electrode cell produced in Example 1.
[Fig. 3] Fig. 3 is a chat showing charging and discharging outputs of a three-electrode cell produced in Example 2.
[Fig. 4] Fig. 4 is a chart showing charging and discharging outputs of a three-electrode cell produced in Example 3.
[Fig. 5] Fig. 5 is a chart showing charging and discharging outputs of a three-electrode cell produced in Example 4.

### MODE(S) FOR CARRYING OUT THE INVENTION

Hereinafter, the invention will be described in detail.

Examples of a power storage device of the invention include, but are not particularly limited to, a nonaqueous electrolyte primary battery, an aqueous electrolyte primary battery, a nonaqueous electrolyte secondary battery, an aqueous electrolyte secondary battery, an all-solid electrolyte primary battery, an all-solid electrolyte secondary battery, a capacitor, an electric double layer capacitor, or a lithium ion capacitor.

The power storage device of the invention includes an electrode and an electrolytic solution. The electrode is formed of an electrode material containing a carbon material. The electrode material is essentially free of a binder. Note that as used herein, the wording "essentially free of a binder" means that the content of the binder in 100 wt% of the electrode material is 2 wt% or less.

In addition, the electrode is a pair of polarizable electrodes or a pair of electrodes such as a positive electrode and a negative electrode. In the invention, at least one of the pair of electrodes may be made of an electrode material that contains a carbon material and is essentially free of a binder. However, it is preferable that both electrodes of the pair of electrodes are each made of an electrode material containing a carbon material and essentially free of a binder.

The electrolytic solution contains an ionic liquid. The ionic liquid includes, as components, a cation and an anion.

The power storage device of the invention is provided with: an electrode formed of an electrode material containing a carbon material and essentially free of a binder; and an electrolytic solution including an ionic liquid including, as components, a cation and an anion, and thus has excellent withstand voltage performance and enables high-voltage driving.

Conventionally, when a power storage device provided with an electrode containing a binder and an electrolytic solution is subject to high-voltage driving, the binder and/or the electrolytic solution are decomposed, so that capacitor performance and battery performance may be deteriorated and a safety problem may thus occur. Consequently, such a power storage device has insufficient withstand voltage performance and a problem of difficulty in high-voltage driving.

The present inventors have paid attention to an electrode material constituting an electrode and an electrolytic solution, and have found that use of an electrode material containing a carbon material and essentially free of a binder and an electrolytic solution including an ionic liquid including, as components, a cation and an anion makes it possible to suppress decomposition of the binder and the electrolytic solution, thereby capable of increasing withstand voltage performance and increasing a driving voltage.

As described above, since the driving voltage can be increased in the power storage device of the invention, the energy density can be increased. Thus, the power storage device of the invention can be suitably used as a capacitor or a secondary battery, and can be more suitably used as, in particular, a lithium ion capacitor or an electric double layer capacitor.

Hereinafter, each member of the power storage device in the invention will be described in more detail.

### [Electrode]

### (Carbon Material)

The electrode used in the power storage device of the invention is made of an electrode material containing a carbon material.

In the invention, the content of the carbon material in 100 wt% of the electrode material is preferably 90 wt% or more and more preferably 98 wt% or more. In this case, the withstand voltage performance can be further enhanced, and the driving voltage can be further increased. The upper limit value of the content of the carbon material in 100 wt% of the electrode material may be, for example, 100 wt%.

While 0.2 g of the carbon material is charged into a cylindrical syringe with a diameter of 2 cm, the material is compressed at a pressure of 16 kN. Then, the whole amount of the compressed carbon material is taken out from the syringe and injected onto a sieve having a mesh size of 4.75 mm. When the sieve is shaken for 1 min after the injection, the carbon material remaining on the sieve after shaking has a weight of preferably 90 wt% or more based on 100 wt% of the carbon material injected onto the sieve. In this case, the carbon material essentially free of a binder can form a self-supporting film by the compression at 16 kN. The wording "essentially free of a binder" means that the content of the binder is 2 wt% or less based on 100 wt% of the film-forming material.

The carbon material preferably includes a plurality of recesses and a plurality of protrusions. In particular, the recesses and the protrusions are preferably fitted to each other by pressurization. In this case, the self-supporting film can be formed more easily.

In addition, it is preferable that the shapes and sizes of the protrusions or the recesses are shapes and sizes capable of forming a self-supporting film.

When the planar shape of each recess is substantially circular, the diameter of the recess is preferably 0.1 µm or more and 1000 µm or less. When the planar shape of each recess is substantially elliptical, the major diameter of each recess is preferably 0.1 µm or more and 1000 µm or less. When the planar shape of each recess is substantially rectangular, the long side of the recess is preferably 0.1 µm or more and 1000 µm or less. The depth of each recess is preferably 0.1 µm or more and 1000 µm or less. When the shape and size of each recess are within the above ranges, the protrusions and the recesses are fitted to each other, so that the self-supporting film can be more easily formed.

When the planar shape of each protrusion is substantially circular, the diameter of the protrusion is preferably 0.1 µm or more and 1000 µm or less. When the planar shape of each protrusion is substantially elliptical, the major diameter of the protrusion is preferably 0.1 µm or more and 1000 µm or less. When the planar shape of each protrusion is substantially rectangular, the long side of the protrusion is preferably 0.1 µm or more and 1000 µm or less. The height of a projected portion in the protrusion is preferably 0.1 µm or more and 1000 µm or less. When the shape and size of each protrusion are within the above ranges, the protrusions and the recesses are fitted to each other, so that the self-supporting film can be more easily formed.

The carbon material is preferably a porous body. In this case, the recesses correspond to the respective pores of the porous body.

The carbon material has a BET specific surface area of preferably 240 m²/g or more, more preferably 450 m²/g or more, still more preferably 1100 m²/g or more, and preferably 4000 m²/g or less and more preferably 3500 m²/g or less. When the BET specific surface area is within the above range, characteristics such as the capacitance of the power storage device can be further increased.

The carbon material may be provided with pores such as mesopores. Note that the mesopores refer to pores having a pore diameter of 2 nm or more and 50 nm or less. The volume of mesopores refers to the sum of the volumes of all mesopores in the carbon material (total mesopore volume). The volume of mesopores may be measured, for example, by a BJH (Barret, Joyner, Hallender) method, which is a gas adsorption method.

The above volume of mesopores is preferably 0.04 mL/g or more, more preferably 0.05 mL/g or more, and still more preferably 0.1 mL/g or more. The upper limit of the volume of mesopores is not particularly limited, and is preferably 20 mL/g or less and more preferably 1.0 mL/g or less. When the volume of mesopores is the above lower limit or more, the electrolyte solution more easily permeates through the surface of the carbon material, and a wide specific surface area can be more effectively utilized. Thus, the capacitance of the power storage device can be further increased.

The carbon material may be provided with pores such as micropores in addition to mesopores. The volume of micropores is preferably 1.0 mL/g or less and more preferably 0.8 mL/g or less. The lower limit of the volume of micropores is not particularly limited, and is preferably 0.01 mL/g or more. The micropores contribute to an improvement in the specific surface area, but have a small pore diameter. Thus, the micropores have a surface area where the electrolytic solution hardly permeates and which is hardly utilized as a battery. When the volume of micropores is the above upper limit or less, the electrolytic solution more easily permeates through the surface of the carbon material, and a wide specific surface area can be more effectively utilized. Thus, the capacitance of the power storage device can be further increased.

Note that the micropores refer to those having a pore diameter of less than 2 nm. The volume of micropores may be measured, for example, by an MP (MicroPore, analysis) method, which is a gas adsorption method. In addition, the volume of micropores refers to the sum of the volumes of all micropores in the carbon material.

The carbon material may consist of a carbon material having a graphene layered structure, or may consist of a resin carbide. In addition, the carbon material may be a mixture of a carbon material having a graphene layered structure and a resin carbide. The carbon material in the invention further optionally contains a resin remaining without being carbonized.

The presence or absence of a graphene layered structure can be checked by whether or not a peak(s) around 2θ = 26° (a peak(s) derived from a graphene layered structure) of the carbon material is observed when an X-ray diffraction spectrum is measured using CuKα radiation (at a wavelength of 1.541 Å). The X-ray diffraction spectrum may be measured by wide-angle X-ray diffractometry. The X-ray diffractometer used may be, for example, a SmartLab (manufactured by Rigaku Corporation).

Alternatively, the carbon material in the invention may be a composite of a resin carbide and a carbon material having a graphene layered structure. In this case, when the composite is measured by X-ray diffractometry, the intensity of the peak(s) at 2θ around 26° varies depending on the compounding ratio of amorphous carbon, which is a resin carbide, and crystalline graphite. Even in this case, part of the resin may remain without being carbonized.

Since the resin is used for the purpose of forming a carbide, the resin is distinguished from a binder used for an electrode material of the power storage device.

Examples of the resin used for the above resin carbide include polypropylene glycol, polyethylene glycol, styrene polymer (polystyrene), vinyl acetate polymer (polyvinyl acetate), polyglycidyl methacrylate, polyvinyl butyral, polyacrylic acid, styrene butadiene rubber, polyimide resin, polyester polyol, polytetrafluoroethylene, or a fluorine-based polymer such as polyvinylidene fluoride. Note that the resin may be used singly or two or more kinds thereof may be used in combination. Preferable examples thereof include polyethylene glycol or polyvinyl acetate.

The content of the resin and/or the resin carbide contained in 100 wt% of the carbon material is preferably 1 wt% or more, more preferably 3 wt% or more, still more preferably 10 wt% or more, particularly preferably 15 wt% or more, and preferably 99 wt% or less and more preferably 95 wt% or less. By setting the content of the resin and/or the resin carbide to the above lower limit or more and the above upper limit or less, the capacitor characteristics and battery properties of the power storage device can be further enhanced.

The carbon material preferably contains a carbon material having a graphene layered structure. In this case, conductivity can be further increased. Accordingly, characteristics such as rate characteristics in the power storage device can be further improved. Hence, the content of the carbon material having a graphene layered structure as contained in 100 wt% of the carbon material is preferably 0.1 wt% or more and more preferably 1 wt% or more. The upper limit of the content of the carbon material having a graphene layered structure as contained in 100 wt% of the carbon material is not particularly limited, and is, for example, 99 wt%.

As used herein, examples of the carbon material having a graphene layered structure include graphite or exfoliated graphite.

Graphite is a layered body having a plurality of graphene sheets. The number of graphene sheets layered in graphite is usually about 100,000 to 1 million layers. Examples of the graphite that can be used include natural graphite, artificial graphite, or expanded graphite. The expanded graphite has a higher ratio of a larger interlayer distance between graphene layers than that of normal graphite. Thus, it is preferable to use expanded graphite as the graphite.

The exfoliated graphite is obtained by exfoliating original graphite, and refers to a graphene sheet layered body thinner than the original graphite. The number of graphene sheets layered in the exfoliated graphite may be smaller than that of the original graphite. Note that the exfoliated graphite may be oxidized exfoliated graphite.

In the exfoliated graphite, the number of layered graphene sheets is not particularly limited, and is preferably 2 or more and more preferably 5 or more, and preferably 1000 or less and more preferably 500 or less. When the number of layered graphene sheets is equal to or more than the above lower limit, scrolling of the exfoliated graphite in liquid and stacking of the exfoliated graphite materials are suppressed. As a result, the conductivity of the exfoliated graphite can be further enhanced. When the number of layered graphene sheets is the above upper limit or less, the specific surface area of the exfoliated graphite can be further increased.

In addition, the exfoliated graphite is preferably partially exfoliated graphite having a partially exfoliated graphite structure.

More specifically, the wording "partially exfoliated graphite" means that the graphene layers are open from the end edge to the inside to some extent in the graphene layered body, that is, part of graphite is exfoliated at the end edge (edge portion). In addition, the wording also means that the graphite layers are layered in substantially the same manner as in the original graphite or primary exfoliated graphite at the central portion. Accordingly, the portion where the graphite is partially exfoliated at the end edge is in communication with the central portion. Further, the above partially exfoliated graphite may include exfoliated graphite obtained by exfoliating graphite at the end edge.

As described above, in the partially exfoliated graphite, the graphite layers are layered in substantially the same manner as in the original graphite or primary exfoliated graphite at the central portion. Because of the above, this graphite has a higher degree of graphitization than conventional graphene oxide or carbon black, and thus excels in conductivity. In conclusion, in the case of use for an electrode of the power storage device, electron conductivity in the electrode can be further increased, and charging and discharging with a larger current can be performed.

Note that whether or not graphite is partially exfoliated can be checked, for example, by observation with a scanning electron microscope (SEM) or an X-ray diffraction spectrum in a manner similar to the case of the exfoliated graphite/resin composite material described in WO 2014/034156.

### (Process for Producing Carbon Material)

Hereinafter, a first process or a second process as an example of the process for producing the carbon material will be described.

### First Process;

In the first process, first, graphite or primary exfoliated graphite is mixed with a resin to obtain a first mixture (mixing step). Note that the mixing procedure is not particularly limited, and examples of the procedure that can be used include ultrasonic mixing, mixing with a mixer, mixing with a stirrer, or a procedure including putting graphite or primary exfoliated graphite and a resin into a sealable container and shaking the container.

Meanwhile, in this mixing step, for instance, a solvent may be further added. Examples of the solvent that can be used include water, ethanol, methanol, tetrahydrofuran (THF), or N-methyl-2-pyrrolidone (NMP). The first mixture obtained in this mixing step is desirably a mixed liquid. Also, in the mixing step, a dispersant such as carboxymethyl cellulose (CMC) or sodium dodecyl sulfate (SDS) may be further mixed. Meanwhile, the first mixture may also be dried. Examples of the drying procedure that can be used include, but are not particularly limited to, air drying, a hot plate, vacuum drying, or freeze drying. Note that the dried product of the mixed liquid is also preferably liquified.

Note that it is preferable to use, as the graphite, expanded graphite because graphite can be more easily exfoliated in a heating step described later. In addition, the primary exfoliated graphite, in a broad sense, includes exfoliated graphite obtained by exfoliating graphite by various procedures. The primary exfoliated graphite may be partially exfoliated graphite. Since the primary exfoliated graphite may be obtained by exfoliating graphite, its specific surface area may be larger than that of graphite.

Examples of the above resin include, but are not particularly limited to, polypropylene glycol, polyethylene glycol, polyglycidyl methacrylate, vinyl acetate polymer (polyvinyl acetate), polyvinyl butyral, polyacrylic acid, styrene polymer (polystyrene), styrene butadiene rubber, polyimide resin, polyester polyol, polytetrafluoroethylene, or a fluorine-based polymer such as polyvinylidene fluoride.

Next, particles different from the carbon material are further added to and mixed with the resulting first mixture. This makes it possible to dispose the particles different from the carbon material in the matrix of the carbon material constituting the first mixture to form a second mixture. In addition, for the carbon material constituting the second mixture, the particles different from the carbon material may be coated to form the second mixture. Note that the mixing procedure is not particularly limited, and examples thereof include ultrasonic mixing, mixing with a mixer, mixing with a stirrer, or a procedure including putting the dried first mixture and particles in a sealable container and shaking the container.

The above particles different from the carbon material may be an activator. The above particles different from the carbon material are not particularly limited, and examples thereof include particles of zinc hydroxide, zinc chloride, zinc sulfide, calcium hydroxide, calcium chloride, calcium sulfide, calcium carbonate, sodium hydroxide, sodium chloride, sodium sulfide, sodium carbonate, potassium hydroxide, potassium chloride, potassium sulfide, potassium carbonate, phosphoric acid, zinc phosphate, calcium phosphate, sodium phosphate, or potassium phosphate. They may be used singly or two or more kinds thereof may be used in combination.

The particle size of the particles different from the carbon material is preferably 0.1 µm or more and 1000 µm or less. By setting the particle diameter of the particles different from the carbon material to be within the above range, the carbon material to be obtained can more easily form a self-supporting film. Note that the particle size refers to an average particle size calculated from a volume-based distribution by dry laser diffractometry. The average particle diameter may be measured using, for example, an MT3300 EXII manufactured by MicrotracBEL Corp.

Next, the above second mixture is heated (heating step). The heating temperature during the heating step may be, for example, from 200°C to 1000°C. The heating may be performed in the air or under an inert gas (e.g., nitrogen gas) atmosphere. It is desirable to carbonize at least part of the resin by this heating step. The resin may be fully carbonized. In addition, it is desirable that the first mixture contained in the second mixture is solidified by this heating step to form a solid/solid matrix with the particles different from the carbon material. Further, in this heating step, part of graphite or primary exfoliated graphite may be partially exfoliated to yield the above-described partially exfoliated graphite. Note that after this heating step, activation treatment may be further performed using a chemical activation process or a gas activation process.

Next, the above particles are removed from the post-heating second mixture. At this time, sites from which the particles disposed in the matrix of the second mixture have been removed become the plurality of recesses and the plurality of protrusions. Note that examples of the particle-removing procedure include, but are not particularly limited to, a procedure including washing with a solvent such as water and drying. In addition, the particles may be removed and then pulverized.

The carbon material obtained by such a production process includes the plurality of recesses and the plurality of protrusions. Thus, even in the case essentially free of a binder, a self-supporting film (electrode film) can be easily formed.

Note that the first process makes it possible to produce a carbon material that is a composite material of a resin and/or a resin carbide and a carbon material having a graphene layered structure, such as original graphite, primary exfoliated graphite, or partially exfoliated graphite.

### Second Process;

In the second process, first, particles different from the carbon material are added to and mixed with a resin to be a matrix. This makes it possible to dispose the particles different from the carbon material in the resin matrix to form a mixture. In addition, particles different from the carbon material may be coated with a resin to form a mixture. Note that the mixing procedure is not particularly limited, and examples thereof include ultrasonic mixing, mixing with a mixer, mixing with a stirrer, or a procedure including putting a resin and particles in a sealable container and shaking the container.

As the resin, a liquid resin is preferably used. Examples of the above resin include, but are not particularly limited to, polypropylene glycol, polyethylene glycol, polyglycidyl methacrylate, vinyl acetate polymer (polyvinyl acetate), polyvinyl butyral, polyacrylic acid, styrene polymer (polystyrene), styrene butadiene rubber, polyimide resin, polyester polyol, polytetrafluoroethylene, or a fluorine-based polymer such as polyvinylidene fluoride.

The above particles different from the carbon material may be an activator. The above particles different from the carbon material are not particularly limited, and examples thereof include particles of zinc hydroxide, zinc chloride, zinc sulfide, calcium hydroxide, calcium chloride, calcium sulfide, calcium carbonate, sodium hydroxide, sodium chloride, sodium sulfide, sodium carbonate, potassium hydroxide, potassium chloride, potassium sulfide, potassium carbonate, phosphoric acid, zinc phosphate, calcium phosphate, sodium phosphate, or potassium phosphate. They may be used singly or two or more kinds thereof may be used in combination.

The particle size of the particles different from the carbon material is preferably 0.1 µm or more and 1000 µm or less. By setting the particle diameter of the particles different from the carbon material to be within the above range, the carbon material to be obtained can more easily form a self-supporting film. Note that the average particle size refers to an average particle size calculated from a volume-based distribution by dry laser diffractometry. The average particle diameter may be measured using, for example, an MT3300 EXII manufactured by MicrotracBEL Corp.

Next, the above mixture is heated (heating step). The heating temperature during the heating step may be, for example, from 200°C to 1000°C. The heating may be performed in the air or under an inert gas (e.g., nitrogen gas) atmosphere. It is desirable to carbonize at least part of the resin by this heating step. The resin may be fully carbonized. In addition, it is desirable that the first mixture contained in the second mixture is solidified by this heating step to form a solid/solid matrix with the particles different from the carbon material. Note that after this heating step, activation treatment may be further performed using a chemical activation process or a gas activation process.

Next, the particles are removed from the post-heating mixture. At this time, sites from which the particles disposed in the matrix have been removed become the plurality of recesses and the plurality of protrusions. Note that examples of the particle-removing procedure include, but are not particularly limited to, a procedure including washing with a solvent such as water and drying. In addition, the particles may be removed and then pulverized.

The carbon material obtained by the second process includes the plurality of recesses and the plurality of protrusions. Thus, even in the case essentially free of a binder, a self-supporting film (electrode film) can be easily formed.

Accordingly, it is possible to use, as the starting material, a mixture of graphite or primary exfoliated graphite and a resin as in the first process, or only a resin without using graphite or primary exfoliated graphite as in the second process.

Note that the second process makes it possible to produce a carbon material consisting of a resin carbide. However, the carbon material may further optionally contain a non-carbonized resin.

### (Binder)

The electrode material constituting the electrode used in the power storage device of the invention is essentially free of a binder. Note that as used herein, the wording "essentially free of a binder" means that the content of the binder in 100 wt% of the electrode material is 2 wt% or less.

Examples of the binder include polyvinyl butyral, polytetrafluoroethylene, styrene butadiene rubber, polyimide resin, acrylic resin, a fluorine-based polymer (e.g., polyvinylidene fluoride), or a water-soluble resin (e.g., carboxymethyl cellulose).

### (Additional Material)

The electrode material constituting the electrode used in the power storage device of the invention may further optionally contain an additional material(s).

Examples of the additional material include a positive electrode active material, a negative electrode active material, or a conduction aid.

Examples of the positive electrode active material include lithium metal oxide, lithium sulfide, or sulfur.

Examples of the lithium metal oxide include those having a spinel structure, a layered rock salt structure, or an olivine structure, or a mixture thereof.

Examples of the lithium metal oxide having a spinel structure include lithium manganate.

Examples of the lithium metal oxide having a layered rock salt structure include lithium cobaltate, lithium nickelate, or a ternary system.

Examples of the lithium metal oxide having an olivine structure include lithium iron phosphate, lithium manganese iron phosphate, or lithium manganese phosphate.

The positive electrode active material may contain what is called a dopant. The positive electrode active material may be used singly or two or more kinds thereof may be used in combination.

Examples of the negative electrode active material that can be used include natural graphite, artificial graphite, hard carbon, a metal oxide, lithium titanate, or a silicon-based active material. The negative electrode active material may be used singly, or two or more kinds thereof may be used in combination.

Examples of the conduction aid that can be used include graphene, artificial graphite, a granular graphite compound, a fibrous graphite compound, carbon black, or activated carbon. The conduction aid may be used singly or two or more kinds thereof may be used in combination.

### (How to Manufacture Electrode)

The electrode used in the power storage device of the invention can be manufactured by shaping an electrode material containing, for instance, the above carbon material by optionally including a solvent or the like.

The electrode material can be shaped by, for example, forming a sheet with a roller and then drying the sheet. Alternatively, a coating liquid composed of an electrode material containing, for instance, the carbon material and a solvent may be applied onto a current collector and then dried.

Note that examples of the solvent that can be used include ethanol, N-methylpyrrolidone (NMP), tetrahydrofuran (THF), or water.

### [Electrolytic Solution]

The electrolytic solution used in the power storage device of the invention contains an ionic liquid. The ionic liquid includes, as components, a cation and an anion.

Examples of the cation include an ion of 1-butyl-1-methylpyrrolidinium, n,n-diethyl-n-methyl-n-(2-methoxyethyl)ammonium, 1-methyl-1-propylpiperidinium, 1-methyl-1-propyl-pyrrolidinium, N-(2-methoxyethyl)-N-methylpyrrolidinium, N,N,N-trimethyl-N-propylammonium, or 1-ethyl-3-methylimidazolium. Among them, 1-butyl-1-methylpyrrolidinium or n,n-diethyl-n-methyl-n-(2-methoxyethyl)ammonium is preferable. More preferred is 1-butyl-1-methylpyrrolidinium. In this case, decomposition of the electrolytic solution can be further suppressed. This can further enhance the withstand voltage performance of the power storage device and can further increase the driving voltage. Note that one kind of the cation may be used singly or two or more kinds thereof may be used in combination.

Examples of the anion include an ion of bis (fluorosulfonyl)imide, bis (trifluoromethanesulfonyl)imide, tetrafluoroborate, or methyl phosphonate. Among them, bis(fluorosulfonyl)imide is preferable. In this case, decomposition of the electrolytic solution can be further suppressed. This can further enhance the withstand voltage performance of the power storage device and can further increase the driving voltage.

Note that the electrolytic solution may contain another solvent and/or electrolyte. However, from the viewpoint of further enhancing the withstand voltage performance of the power storage device and further increasing the driving voltage, the content of the ionic liquid in 100 wt% of the electrolyte solution is preferably 80 wt% or higher and more preferably 90 wt% or higher. The upper limit value of the content of the ionic liquid in 100 wt% of the electrolytic solution is 100 wt%, and the electrolytic solution preferably consists of the ionic liquid.

### (Separator)

The power storage device of the invention may further include a separator. The separator may be disposed, for example, between a pair of electrodes. A material with a separator disposed between the positive electrode side and the negative electrode side may be wound and used, or may be stacked and used.

The separator is not particularly limited, and may be made of, for example, an insulating material capable of retaining an electrolytic solution. It is possible to use, as the separator, for example, a porous film base material such as polypropylene or polyethylene, a glass fiber base material, a nonwoven fabric, or a cellulose-based base material such as electric field capacitor paper or kraft paper.

Next, the invention will be clarified by giving specific Examples and Comparative Examples in the invention. Note that the invention is not limited to the following Examples.

### (Example 1)

One g of expanded graphite (trade name "PF powder 8" with a BET specific surface area = 22 m²/g; manufactured by Toyo Tanso Co., Ltd.) and 234 g of polyethylene glycol (trade name "PEG 600", manufactured by Sanyo Chemical Industries, Ltd.) were mixed with a mixer at 7000 rpm for 30 min. The mixture was then dried in a dryer at 150°C to prepare a composition in which polyethylene glycol was adsorbed on the expanded graphite.

Next, 5 g of potassium carbonate (K₂CO₃, with an average particle diameter: 600 µm; manufactured by Wako Pure Chemical Industries, Ltd.) as an activator was added to 5 g of the prepared composition, and the mixture was homogeneously mixed using a mill. The resulting mixture was heated from 300°C to 370°C over 3 h under a nitrogen atmosphere to yield a carbide. The resulting carbide was milled and further subjected to activation treatment. In the activation treatment, the material was held at an activation temperature of 850°C for an activation period of 100 min under a nitrogen atmosphere. Finally, the carbide after the activation treatment was washed neutral with hot water to obtain a carbon material.

The resulting carbon material was imaged by scanning electron microscopy (SEM), and the carbon material was then found to be partially exfoliated graphite having a plurality of recesses and a plurality of projections.

In addition, 0.2 g of the carbon material obtained was gradually pressurized while charged in a cylindrical syringe having a diameter of 2 cm, and compressed at a pressure of 16 kN for 10 s. Subsequently, the whole amount of the compressed carbon material was taken out from the syringe, and injected onto a stainless steel sieve (with an inner diameter: 150 mm, and a depth: 45 mm) having a mesh size of 4.75 mm according to JIS Z8801-1. Next, the sieve was shaken at a speed of 60 rpm for 1 min while using a shaker (product number "SHAKER SSR-2", manufactured by ASONE Corporation) in a RECIPROCATOR mode. The carbon material remaining on the sieve was then weighed. As a result, the weight of the carbon material remaining on the sieve was 97.9 wt% based on 100 wt% of the carbon material injected onto the sieve.

How to Evaluate Charge/Discharge Using Three-Electrode Cell;

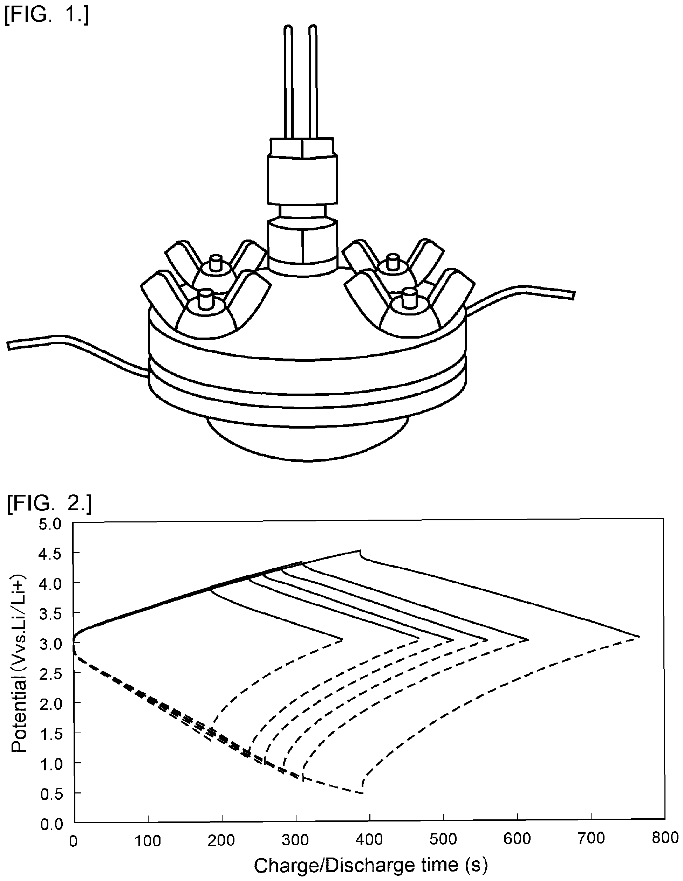

As a cell, a three-electrode cell made of aluminum was used (Fig. 1).

First, 0.2 g of the carbon material produced additionally using substantially the same procedure as above was gradually pressurized while charged in a cylindrical syringe having a diameter of 2 cm, and compressed at a pressure of 16 kN for 10 s. The post-compression material was punched out to a diameter of 10 mm to prepare a disk-shaped electrode. The two electrodes as so prepared were used as a positive electrode and a negative electrode, and a cell was assembled by interposing a separator (cellulose-based one, with a diameter of 12 mm) between the electrodes. Note that lithium metal was used for a reference electrode. In addition, an electrolytic solution used was an ionic liquid containing 1-butyl-1-methylpyrrolidinium and bis(fluorosulfonyl)imide.

The charge/discharge was tested at a charge current of 5.0 mA and a discharge current of 5.0 mA, and the operating voltage was sequentially increased from 0 to 3.0 V, 3.2 V, 3.4 V, 3.6 V, and 4.0 V. Measurement at each voltage was duplicated, and data of the second cycle was used. The temperature environment during charge and discharge was set to a thermostatic chamber at 25°C.

The charge/discharge test has demonstrated that in Example 1, high-voltage driving at 4 V was enabled.

### (Example 2)

Except that an ionic liquid containing n,n-diethyl-n-methyl-n-(2-methoxyethyl)ammonium and bis(fluorosulfonyl)imide was used as the electrolytic solution, substantially the same procedure as in Example 1 was repeated to manufacture a three-electrode cell. The charge/discharge was then evaluated. The results have demonstrated that high-voltage driving at 4 V was also enabled in Example 2.

### (Example 3)

Except that an ionic liquid containing 1-methyl-1-propylpiperidinium and bis(fluorosulfonyl)imide was used as the electrolytic solution, substantially the same procedure as in Example 1 was repeated to manufacture a three-electrode cell. The charge/discharge was then evaluated. The results have demonstrated that high-voltage driving at 4 V was also enabled in Example 3.

### (Example 4)

Except that an ionic liquid containing 1-methyl-1-propyl-pyrrolidinium and bis(fluorosulfonyl)imide was used as the electrolytic solution, substantially the same procedure as in Example 1 was repeated to manufacture a three-electrode cell. The charge/discharge was then evaluated. The results have demonstrated that high-voltage driving at 4 V was also enabled in Example 4.

### (Comparative Example 1)

As the carbon material, activated carbon (trade name "KURARAY COAL YP 50F", manufactured by KURARAY CO., LTD.) was used as it was instead of partially exfoliated graphite having a plurality of recesses and a plurality of protrusions.

In addition, an aqueous solution containing 1 wt% of carboxymethyl cellulose (CMC, trade name "#1120"; manufactured by Daicel Corporation) as a binder and activated carbon were mixed at a weight ratio of 1000:90 to prepare a slurry, and the slurry was applied onto aluminum current collector foil. The resulting coating film was dried to produce an electrode film (the weight ratio between the binder and the activated carbon after drying was 10:90). After the film formation, the material was punched out to a diameter of 10 mm to manufacture a disk-shaped electrode. The charge/discharge was evaluated like in Example 4 except for the above points. The results have demonstrated that in Comparative Example 1, 10 wt% of the binder resin was used to form a film on the aluminum current collector foil. However, the binder was decomposed at the time of charge/discharge evaluation, and high-voltage driving at 4 V was impossible.

### (Comparative Example 2)

As the carbon material, activated carbon (trade name "KURARAY COAL YP 50F", manufactured by KURARAY CO., LTD.) was used as it was instead of partially exfoliated graphite having a plurality of recesses and a plurality of protrusions.

Here, 0.2 g of this activated carbon was gradually pressurized while charged in a cylindrical syringe having a diameter of 2 cm, and compressed at a pressure of 16 kN for 10 s. Subsequently, the whole amount of the compressed carbon material was taken out from the syringe, and injected onto a stainless steel sieve (with an inner diameter: 150 mm, and a depth: 45 mm) having a mesh size of 4.75 mm according to JIS Z8801-1. Next, the sieve was shaken at a speed of 60 rpm for 1 min while using a shaker (product number "SHAKER SSR-2", manufactured by ASONE Corporation) in a RECIPROCATOR mode. The carbon material remaining on the sieve was then weighed. As a result, the weight of the carbon material remaining on the sieve was 0 wt% based on 100 wt% of the carbon material injected onto the sieve.

In this way, in Comparative Example 2, because of no binder resin, an electrode as a self-supporting film was unable to be manufactured, and it was impossible to evaluate the charge/discharge.

### (Results of High-Voltage Driving)

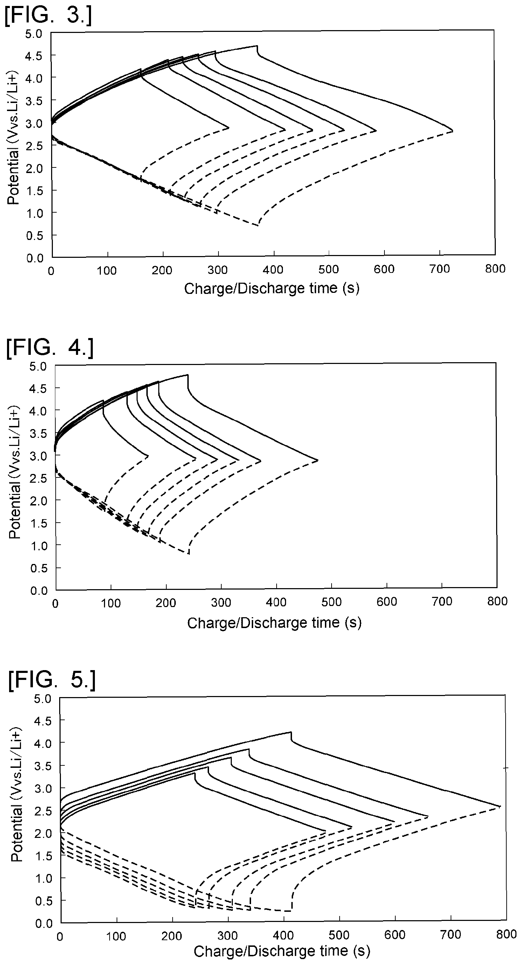

Figs. 2 to 5 are each a chart showing charging and discharging outputs of a three-electrode cell produced in one of Examples 1 to 4. In the chart, the charge/discharge curve on the positive electrode side is denoted by a solid line, and the charge/discharge curve on the negative electrode side is denoted by a dashed line. The chart shows the results of the operating voltage (driving voltage) at 2.5 V, 3.0 V, 3.2 V, 3.4 V, 3.6 V, or 4.0 V when viewed from the left side.

The following criteria were used to evaluate an open circuit potential (OCP), which is an intersection of a charge/discharge curve on the positive electrode side and a charge/discharge curve on the negative electrode side at each drive voltage, linearity of the charge/discharge curve, and an IR drop during discharge in Figs. 2 to 5. Table 1 below shows the results.

### <Criteria>

OCP:
A... The absolute value for the difference between the OCP at the time of 3-V driving and the OCP at the time of 4-V driving is 0.10 V or less
B... The absolute value for the difference between the OCP at the time of 3-V driving and the OCP at the time of 4-V driving is 0.11 V or more.

Linearity of charge/discharge curve:
A... Excellent linearity during 4-V driving.
B... Slightly poor linearity during 4-V driving.

IR drop:
A... The sum of the IR drops on the positive electrode and the negative electrode during discharge at the time of 4-V driving is less than 0.3 V.
B... The sum of the IR drops on the positive electrode and the negative electrode during discharge at the time of 4-V driving is 0.3 V or more and less than 0.5 V.
C... The sum of the IR drops on the positive electrode and the negative electrode during discharge at the time of 4-V driving is 0.5V or more.

**[Table 1]**

| | Electrode material | Binder | Electrolytic solution (anion) | Electrolytic solution (cation) | Separator | 4-V driving possible or impossible | OCP 3-4 V driving | | Linearity of charge/ discharge curve at the time of 4-V driving | IR drop during discharge (sum of positive and negative electrodes) at the time of 4-V driving | |
|---|---|---|---|---|---|---|---|---|---|---|---|
| Example 1 | Partially exfoliated graphite | None | Bis(fluorosulfonyl) imide | 1-Butyl-1-methylpyrrolidinium | Cellulose | Possible | 0.02 V | A | A | 0.05 V | A |
| Example 2 | Partially exfoliated graphite | None | Bis(fluorosulfonyl) imide | n,n-Diethyl-n-methyl-n-(2-methoxyethyl) ammonium | Cellulose | Possible | 0.09 V | A | A | 0.31 V | B |
| Example 3 | Partially exfoliated graphite | None | Bis(fluorosulfonyl) imide | 1-Methyl-1-propylpiperidinium | Cellulose | Possible | 0.10 V | A | B | 0.53 V | C |
| Example 4 | Partially exfoliated graphite | None | Bis(fluorosulfonyl) imide | 1-Methyl-1-propyl- pyrrolidinium | Cellulose | Possible | 0.61 V | B | B | 0.58 V | C |
| Comparative Example 1 | Activated carbon | CMC | Bis(fluorosulfonyl) imide | 1-Methyl-1 propyl- pyrrolidinium | Cellulose | Impossible (binder decomposed | Measurement impossible | | Measurement impossible | Measurement impossible | |
| Comparative Example 2 | Activated carbon | None | - | - | - | Impossible to form an electrode film | Measurement impossible | | Measurement impossible | Measurement impossible | |

Table 1 has demonstrated that in Examples 1 to 4, the withstand voltage performance was excellent and the high-voltage driving (4-V driving) was enabled. In particular, in Examples 1 to 2, capacitor characteristics such as cycle characteristics and output characteristics have been found to be able to be elicited at a higher level even during 4-V driving.

## Claims

1. A power storage device comprising:
an electrode formed of an electrode material containing a carbon material and essentially free of a binder; and
an electrolytic solution comprising an ionic liquid comprising, as components, a cation and an anion.

2. The power storage device according to claim 1, wherein the cation in the ionic liquid is at least one compound selected from the group consisting of 1-butyl-1-methylpyrrolidinium, n,n-diethyl-n-methyl-n-(2-methoxyethyl)ammonium, 1-methyl-1-propylpiperidinium, 1-methyl-1-propyl-pyrrolidinium, N-(2-methoxyethyl)-N-methylpyrrolidinium, N,N,N-trimethyl-N-propylammonium, and 1-ethyl-3-methylimidazolium.

3. The power storage device according to claim 1 or 2, wherein the cation in the ionic liquid is 1-butyl-1-methylpyrrolidinium.

4. The power storage device according to any one of claims 1 to 3, wherein the anion in the ionic liquid is at least one selected from the group consisting of bis(fluorosulfonyl)imide, bis(trifluoromethanesulfonyl)imide, tetrafluoroborate, and methyl phosphonate.

5. The power storage device according to any one of claims 1 to 4, wherein while 0.2 g of the carbon material is charged in a cylindrical syringe having a diameter of 2 cm and is compressed at a pressure of 16 kN and when a whole amount of the compressed carbon material is taken out from the syringe and injected onto a sieve having a mesh size of 4.75 mm and the sieve is shaken for 1 min, the carbon material remaining on the sieve after the shaking has an weight of 90 wt% or more based on 100 wt% of the carbon material injected onto the sieve.

6. The power storage device according to any one of claims 1 to 5, wherein the carbon material comprises a carbon material having a graphene layered structure.

7. The power storage device according to claim 6, wherein the carbon material having a graphene layered structure is graphite or exfoliated graphite.

8. The power storage device according to claim 6 or 7, wherein the carbon material having a graphene layered structure is partially exfoliated graphite having a graphite structure and partially exfoliated graphite.

9. The power storage device according to any one of claims 1 to 8, wherein the carbon material comprises a resin carbide.

10. The power storage device according to any one of claims 1 to 9, which is an electric double layer capacitor or a lithium ion capacitor.
